Europäisches Patentamt

European Patent Office

Office européen des brevets

(19)

(11) Veröffentlichungsnummer: **0 109 626**
**B1**

(12) # EUROPÄISCHE PATENTSCHRIFT

(45) Veröffentlichungstag der Patentschrift:
09.03.88

(51) Int. Cl.⁴: **F 16 K 7/06**

(21) Anmeldenummer: **83111284.2**

(22) Anmeldetag: **11.11.83**

(54) Membranventil.

(30) Priorität: **19.11.82 DE 8232417 U**
**19.11.82 DE 8232418 U**

(43) Veröffentlichungstag der Anmeldung:
**30.05.84 Patentblatt 84/22**

(45) Bekanntmachung des Hinweises auf die Patenterteilung:
**09.03.88 Patentblatt 88/10**

(84) Benannte Vertragsstaaten:
**AT BE CH DE FR GB IT LI LU NL SE**

(56) Entgegenhaltungen:
**AT - B - 195 703**
**AT - B - 215 748**
**DE - C - 2 510 428**
**FR - A - 1 045 343**
**GB - A - 442 790**
**GB - A - 622 204**

(73) Patentinhaber: **Fietz, Manfred, Müllersbaum 40,
D-5093 Burscheid (DE)**

(72) Erfinder: **Fietz, Manfred, Müllersbaum 40,
D-5093 Burscheid (DE)**

(74) Vertreter: **Paul, Dieter-Alfred, Dipl.-Ing.,
Fichtestrasse 18, D-4040 Neuss 1 (DE)**

## Beschreibung

Die Erfindung betrifft ein Membranventil mit einem Ventilgehäuse, das einen Strömungskanal mit einem schräg zur Strömungsrichtung angeordneten Ventilsitz aufweist und bei dem zwischen zur Strömungsrichtung parallelen Einspannflächen am Ventilgehäuse eine Membran mit einem durch eine Ventilspindel von dem Ventilsitz abhebbaren bzw. auf diesen absenkbaren Ventilverschluss eingespannt ist.

Derartige Membranventile sind beispielsweise aus der DE-C-25 10 428 und der FR-A-10 45 343 bekannt. Sie weisen in einem unteren Gehäuseteil einen weitgehend geraden Strömungskanal mit einem schräg zur Strömungsrichtung angeordneten Ventilsitz auf. In Schliessstellung liegt ein Ventilverschlussstück auf dem Ventilsitz auf, das mit einer Ventilspindel verbunden ist, und zwar einmal starr (FR-A-10 45 343) und einmal über ein Gelenk (DE-C-25 10 428), um das das Ventilverschlussstück beim Schliessen nach Aufsetzen auf dem oberen Teil des Ventilsitzes klappenartig schwenken kann.

Das Ventilstück ist Teil einer Membran, die zwichen horizontalen Einspannflächen an dem oberen und unteren Teil des Gehäuses eingespannt ist. Diese Membran ist vom Ventilverschlussstück nach oben gewölbt, so dass zumindest in Schliessstellung von der Druckseite her gesehen eine konkave, ringförmige Rinne entsteht. Auf diese Weise ergibt sich die für das Abheben erforderliche Bewegungsfreiheit des Ventilverschlussstückes.

Nachteilig bei diesen Membranventilen ist, dass ihre Druckfestigkeit begrenzt ist. Dies gilt insbesondere für die Einspannung des Membranrandes, die dem Druck insbesondere bei höheren Temperaturen der Flüssigkeit häufig nicht standhält, so dass der Membranrand je nach Formgebung der Membran herausgedrückt bzw. herausgezogen wird. Das Ventil ist dann nicht mehr gebrauchsfähig.

In der GB-A-442 790 ist ein gattungsfremdes Membranventil offenbart, dessen Ventilsitz in einer vertikalen Ebene verläuft. Hierzu ist im oberen Bereich des Strömungskanals eine haubenförmige Membran eingespannt, die von oben mittels eines vertikal verschiebbaren Kolbens zum Schliessen des Membranventils nach unten gedrückt werden kann.

Der Membranrand verläuft vertikal nach oben und weist dort einen horizontal nach aussen vorstehenden Randsteg auf. In diesem Bereich wird der Membranrand volumetrisch komprimiert, d.h. er wird von drei Seiten, also in beiden radialen Richtungen sowie von oben, mit Druck beaufschlagt. Es handelt sich hier im wesentlichen um eine vertikale Einspannung des Membranrandes, die vor allem deshalb gewählt worden ist, um die Membran im Sinne einer möglichst strömungsgünstigen Führung des Mediums zu formen.

Auch diese Einspannung der Membran ist nur wenig druckfest. Der Randsteg ist in seiner horizontalen Ausdehnung zu klein, um allein ein Herausrutschen des Membranrandes verhindern zu können. Unter anderem auch deshalb wird die Membran zusätzlich zwischen zwei Vertikalwandungen eingeklemmt. Dabei kann in diesem Bereich nur ein begrenzter Klemmdruck aufgeprägt werden, da ansonsten ein Einführen des oberen Deckels nicht möglich wäre. Bei einer vertikalen Einspannung der Membran können somit grundsätzlich keine hohen Einspanndrücke verwirklicht werden.

Der Erfindung liegt die Aufgabe zugrunde, ein Membranventil der eingangs genannten Art so zu verbessern, dass es bei wesentlich höheren Drükken als bisher einsetzbar ist.

Diese Aufgabe wird erfindungsgemäss dadurch gelöst, dass an der zum Strömungskanal abgewandten Seite der Membran eine zumindest bis zur Ebene der dem Strömungskanal zugewandten Einspannfläche reichende, die Membran von der Einspannung in Richtung auf den Strömungskanal führende Stützfläche vorgesehen ist. Diese Stützfläche zwingt der Membran einen von der horizontalen Einsapnnung zum Strömungskanal abbiegenden Verlauf auf, ohne sie in diesem Bereich zu komprimieren, d.h. die Stützfläche hat lediglich die Funktion, die Membran in einer nach unten gerichteten Stellung zu halten. Dies hat zur Folge, dass der Fluiddruck praktisch keine Angriffsfläche mehr für ein Herausdrücken bzw. Herausziehen des Membranrandes aus der Einspannung findet. Entsprechend druckfest ist das Membranventil in diesem Bereich.

Die Stützfläche ist zweckmässigerweise als über den gesamten Umfang der Membran gehende Ringfläche ausgebildet, kann jedoch auch beschränkt sein auf die am meisten gefährdeten Teile des Umfangs der Membran.

In weiterer Ausbildung der Erfindung ist vorgesehen, dass die Stützfläche von dem aussenseitigen Rand eines Ringsteges gebildet ist. Dieser Ringsteg kann beispielsweise an einem die zum Strömungskanal abgewandte Einspannfläche tragenden Gehäuseteil angeformt sein.

Die Membran ist zweckmässigerweise der erfindungsgemässen Geometrie angepasst. So sollte die Membran vom in Schliessstellung unteren Teil des Ventilverschlussstückes in einem von der dem Strömungskanal zugewandten Seite aus gesehen konkaven Bogen nach aussen bis zur Innenwandung des Ventilgehäuses gehen, dort nach oben und dann wieder entgegengesetzt nach aussen zu den Einspannflächen umbiegen. Vom in Schliessstellung oberen Teil des Ventilverschlussstückes sollte die Membran schräg nach oben in gerader Richtung und dann nach aussen an den Einspannflächen umbiegen.

Ferner ist gemäss der Erfindung vorgesehen, dass die Ventilspindel am membranseitigen Ende einen Ringkörper zur Abstützung zumindest eines Teils der Membran in Offenstellung aufweist. Auch dies trägt zur Entlastung der Membran und damit zur Drucksicherheit des Membranventils bei.

In der Zeichnung ist die Erfindung an Hand eines Ausführungsbeispiels näher veranschaulicht. Es zeigen:

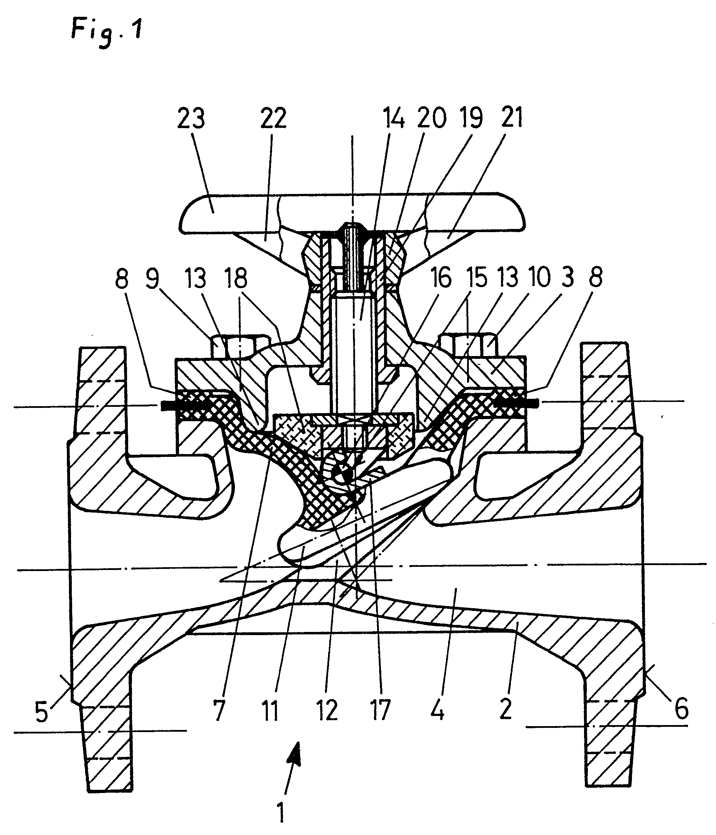

Fig. 1 einen Längsschnitt durch ein Membranventil in etwa halb geöffneter Stellung und

Fig. 2 einen Längsschnitt durch das Membranventil gemäss Fig. 1 in voll geöffneter Stellung.

Das Membranventil 1 besteht aus einem unteren Gehäuseteil 2 und einem oberen Gehäuseteil 3. Das untere Gehäuseteil 2 umschliesst einen praktisch gradlinig verlaufenden Strömungskanal 4 und weist an dessen Enden Flansche 5, 6 auf. Es ist zum oberen Gehäuseteil 3 hin offen.

Der offene Abschnitt des unteren Gehäuseteils 2 wird von einer Membran 7 abgeschlossen, die mit ihrem Membranrand 8 zwischen unterem und oberen Gehäuseteil 2, 3 eingespannt wird. Die Einspannkräfte werden über beide Gehäuseteile 2, 3 verbindende Schrauben 9, 10 aufgebracht.

Die Membran 7 weist ein Ventilverschlussstück 11 auf, das mit einem kegelförmigen Ventilsitz 12 korrespondiert, der schräg zur Strömungsrichtung verläuft. Das Ventilverschlussstück 11 ist ein im wesentlichen runder Teller, von dem aus die Membran nach oben verläuft. Von dem in dieser Ansicht linken Teil geht die Membran 7 von der Oberseite des Ventilverschlussstückes 11 nahe der Mitte in einem nach aussen gerichteten, von der Druckseite her gesehen konkaven Bogen über, und zwar bis zur Innenwandung des unteren Gehäuseteils 2. Dort biegt sie in einem umgekehrten Bogen nach oben ab, um dann wieder entgegengesetzt nach aussen in die Waagerechte zu gehen, wo sie bzw. ihr Membranrand 8 zwischen den beiden Gehäuseteilen 2, 3 eingespannt wird. Im in dieser Ansicht rechten Teil verläuft die Membran 7 vom oberen Rand des Ventilverschlussstückes 11 schräg nach oben und biegt dann aussen in den eingespannten Membranrand 8 um.

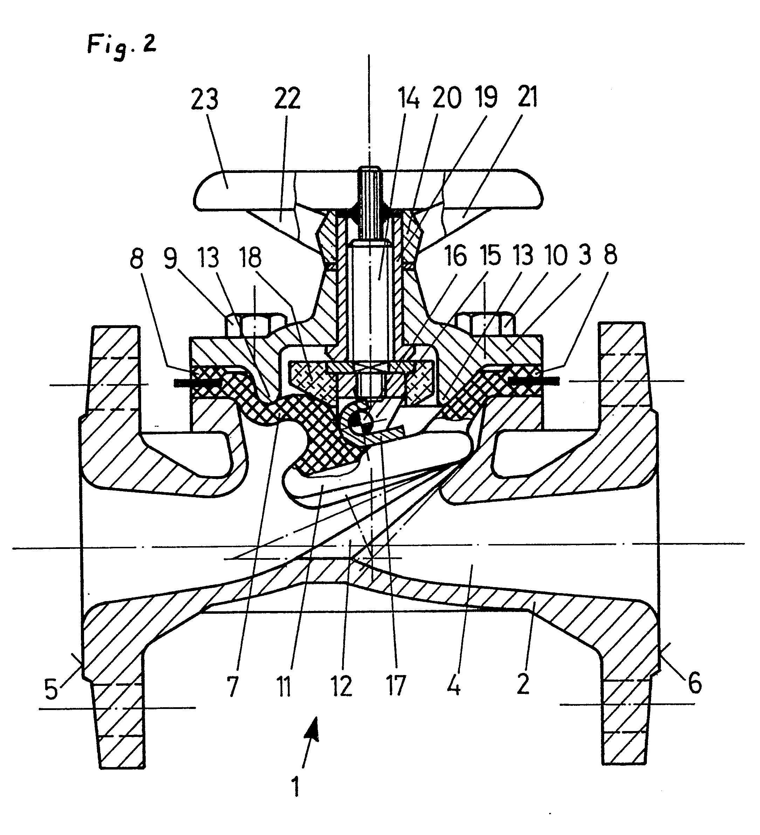

Die Membran 7 wird auf ihrer Oberseite, d.h. der druckabgewandten Seite, von einem vom oberen Gehäuseteil 3 nach unten gerichteten Ringsteg 13 abgestützt. Sein unterer Rand reicht etwas tiefer als die Einspannfläche am unteren Gehäuseteil 2. Unabhängig von der jeweiligen Stellung des Ventilverschlussstückes 11 sorgt der Ringsteg 13 dafür, dass die Membran 7 von der Einspannung zunächst nach unten biegt. Dies macht insbesondere Figur 2 deutlich, in der sich das Ventilverschlussstück 11 in der Offenstellung befindet. Der Ringsteg 13 verhindert dabei, dass die Flüssigkeit, die durch das Membranventil 1 einfliesst, am Membranrand 8 in der Weise angreifen kann, dass dieser herausgedrückt bzw. herausgezogen wird.

Das Ventilverschlussstück 11 ist an seiner Oberseite mit einer Ventilspindel 14 verbunden, und zwar über ein Schwenkgelenk 15. Letzteres weist einen quer zur Strömungsrichtung waagerecht verlaufenden Bolzen 16 auf, der an dem membranseitigen Ende der Ventilspindel 14 angeordnet ist. Dieser Bolzen 16 wird von einem an dem Ventilverschlussstück 11 befestigten Haken 17 umfasst, jedoch nur so weit, dass der Bolzen 16 beispielsweise bei der Montage aus dem Haken 17 seitwärts herausrutschen bzw. in diesen hineinrutschen kann. Dieser Art Verbindung soll zudem eine geringe seitliche Bewegung des Ventilverschlussstückes 11 etwa beim Aufsetzen auf den Ventilsitz 12 ermöglichen.

Die Ventilspindel 14 ist oberhalb des Schwenkgelenkes 15 von einem Ringkörper 18 umgeben, der eine zusätzliche Abstützung insbesondere des in dieser Ansicht linken Teils der Membran 8 bietet. Die Ventilspindel 14 weist oberhalb dieses Ringkörpers 18 aussenseitig ein Schraubgewinde auf, mit dem sie in einer Gewindehülse 19 mit einem innenseitigen Schraubgewinde geführt ist. Die Gewindehülse 19 ist drehbar im oberen Gehäuseteil 3 gelagert und fest mit einem sie im oberen Teil umgebenden Ringteil 20 verbunden. Von diesem Ringteil 20 gehen Speichen 21, 22 radial nach aussen zu einem Handrad 23 aus. Durch Drehen des Handrades 23 wird die Gewindehülse 19 mitgenommen, wobei deren Drehbewegung über das Gewinde zwischen ihr und der Ventilspindel 14 in einer Auf- und Abbewegung umgesetzt wird. Diese Lösung hat den Vorteil, dass das Handrad 23 seine Lage während der Verstellung der Ventilspindel 14 nicht ändert, was beispielsweise bei beengten Raumverhältnissen wichtig sein kann.

**Patentansprüche**

1. Membranventil mit einem Ventilgehäuse (2), das einen Strömungskanal (4) mit einem schräg zur Strömungsrichtung angeordneten Ventilsitz (12) aufweist und bei dem zwischen zur Strömungsrichtung parallelen Einspannflächen am Ventilgehäuse (2) eine Membran (7) mit einem durch eine Ventilspindel von dem Ventilsitz (14) abhebbaren bzw. auf diesen absenkbaren Ventilverschluss (11) eingespannt ist, dadurch gekennzeichnet, dass an der zum Strömungskanal (4) abgewandten Seite der Membran (7) eine zumindest bis zur Ebene der dem Strömungskanal (4) zugewandten Einspannfläche reichende, die Membran (7) von der Einspannung in Richtung auf den Strömungkanal (4) führende Stützfläche (13) vorgesehen ist.

2. Membranventil nach Anspruch 1, dadurch gekennzeichnet, dass die Stützfläche (13) als über den gesamten Umfang der Membran (7) gehende Ringfläche ausgebildet ist.

3. Membranventil nach Anspruch 1 oder 2, dadurch gekennzeichnet, dass die Stützfläche von dem aussenseitigen Rand eines Ringsteges (13) gebildet ist.

4. Membranventil nach Anspruch 3, dadurch gekennzeichnet, dass der Ringsteg (13) an einem die zum Strömungskanal (4) abgewandte Einspannfläche tragenden Gehäusteil (3) angeformt ist.

5. Membranventil nach einem der Ansprüche 1 bis 4, dadurch gekennzeichnet, dass die Membran (7) vom in Schliessstellung unteren Teil des Ventilverschlussstückes (11) in einem von der dem Strömungskanal (4) zugewandten Seite aus gesehen konkaven Bogen nach aussen bis zur Innenwandung des Ventilgehäuses (2) geht, dort nach oben und dann wieder entgegengesetzt nach aussen zu den Einspannflächen umbiegt.

6. Membranventil nach einem der Ansprüche 1 bis 5, dadurch gekennzeichnet, dass die Membran (7) vom in Schliessstellung oberen Teil des Ventilverschlussstückes (11) schräg nach oben in im wesentlichen gerader Richtung verläuft und dann nach aussen zu den Einspannflächen umbiegt.

7. Membranventil nach einem der Ansprüche 1 bis 6, dadurch gekennzeichnet, dass die Ventilspindel (14) am membranseitigen Ende einen Ringkörper (18) zur Abstützung zumindest eines Teils der Membran (7) in Offenstellung aufweist.

## Claims

1. Diaphragm valve comprisin a valve housing (2) which has a flow channel (4) with a valve seat (12) arranged obliquely in relation to the direction of flow and wherein there is gripped between gripping surfaces on the valve housing (2), which are parallel to the direction of flow, a diaphragm (7) with a valve closure member (11) adapted to be lifted from and lowered on to the valve seat (14) by a valve spindle, characterised in that there is provided on that side of the diaphragm (7) which is further from the flow channel (4) a supporting surface (13) which extends at least as far as the plane of the gripping surface closer to the flow channel (4) and which guides the diaphragm (7) from the gripping point in the direction of the flow channel (4).

2. Diaphragm valve according to claim 1, characterised in that the supporting surface (13) is made in the form of an annular surface extending over the whole periphery of the diaphragm (7).

3. Diaphragm valve according to claim 1 or 2, characterised in that the supporting surface is formed by the external edge of an annular fillet (13).

4. Diaphragm valve according to claim 3, characterised in that the annular fillet (13) is formed on a housing part (3) which supports the gripping surface further from the flow channel (4).

5. Diaphragm valve according to one of claims 1 to 4, characterised in that the diaphragm (7) extends outwardly from that part of the valve closure member (11) which is lower in the closed position, in an arc which is concave as seen from the side closer to the flow channel (4) to the inside wall of the valve housing (2), and there bends upwardly and then oppositely in the outward direction towards the gripping surfaces.

6. Diaphragm valve according to one of claims 1 to 5, characterised in that the diaphragm (7) extends obliquely upwards in a substantially straight direction from that part of the valve closure member (11) which is higher in the closed position, and then bends over outwardly to the gripping surfaces.

7. Diaphragm valve according to one of claims 1 to 6, characterised in that the valve spindel (14) has, at the end closer to the diaphragm, an annular body for supporting at least a part of the diaphragm (7) in the open position.

## Revendications

1. Soupape à membrane comportant un carter de soupape (2), qui comporte un canal d'écoulement (4) muni d'un siège de soupape (12) disposé obliquement par rapport à la direction d'écoulement et dans laquelle une membrane (7) munie d'un organe de fermeture de soupape (11), qui peut être écarté du siège de soupape (14) ou être abaissé sur ce dernier par l'intermédiaire d'une tige de soupape, est serrée entre des surfaces de serrage, parallèles à la direction d'écoulement et situées sur le boîtier de soupape, caractérisée par le fait que sur le côté de la membrane (7), tourné à l'opposé du canal d'écoulement (4), il est prévu une surface d'appui (13) qui s'étend au moins jusqu'au plan de la surface de serrage tournée vers la canal d'écoulement (4) et guide la membrane de serrage (7) depuis la zone de serrage en direction du canal d'écoulement (4).

2. Soupape à membrane suivant la revendication 1, caractérisée par le fait que la surface d'appui (13) est réalisée sous la forme d'une surface annulaire s'étendant au-delà de l'ensemble du pourtour de la membrane (7).

3. Soupape à membrane selon la revendication 1 ou 2, caractérisée en ce que la surface d'appui est formée par le bord extérieur d'une barrette annulaire (13).

4. Soupape à membrane suivant la revendication 3, caractérisée par le fait que la barrette annulaire (13) est formée par façonnage sur une partie (3) du boîtier, qui porte la surface de serrage tournée à l'opposé du canal d'écoulement (4).

5. Soupape à membrane suivant l'une des revendications 1 à 4, caractérisée par le fait que la membrane (7) s'étend de la partie inférieure, dans la position de fermeture, de l'organe de fermeture de soupape (11), en direction de l'extérieur, selon un arc concave vu à partir du côté tourné vers le canal d'écoulement (4), en direction de la paroi intérieure du boîtier de soupape (2), est rabattue vers le haut en cet endroit, puis est recourbée à nouveau en sens opposé vers l'extérieur en direction des surfaces de serrage.

6. Soupape à membrane suivant l'une des revendications 1 à 5, caractérisée par le fait que la membrane (7) s'étend obliquement vers le haut, à partir de la partie, supérieure dans la position de fermeture, de l'élément de fermeture de soupape (11) selon une disposition sensiblement rectiligne, puis est recourbée vers l'extérieur en direction des surfaces de serrage.

7. Soupape à membrane suivant l'une des revendications 1 à 6, caractérisée par le fait que la tige de soupape (14) comporte, sur l'extrémité tournée vers la membrane, un corps annulaire (18) servant à soutenir, dans la position ouverte, au moins une partie de la membrane (7).

**Fig.1**

Fig. 2